# EUROPÄISCHE PATENTSCHRIFT

(11) **EP 3 793 869 B1**
(45) Veröffentlichungstag und Bekanntmachung des Hinweises auf die Patenterteilung: **13.04.2022**
(21) Anmeldenummer: 19736576.0
(22) Anmeldetag: 26.06.2019
(51) Int. Cl.: B60R 19/18

(54) **STOSSFÄNGERANORDNUNG FÜR EIN KRAFTFAHRZEUG**
BUMPER ARRANGEMENT FOR A MOTOR VEHICLE
ENSEMBLE FORMANT PARE-CHOCS POUR UN VÉHICULE AUTOMOBILE

(30) Priorität: 01.08.2018 DE 102018118658
(43) Veröffentlichungstag der Anmeldung: 24.03.2021
(73) Patentinhaber: GEDIA Gebrüder Dingerkus GmbH, 57439 Attendorn (DE)
(72) Erfinder: CLEMENS, Andre, 57489 Drolshagen (DE); ROTTMANN, Ralf, 57489 Drolshagen (DE)
(74) Vertreter: Köchling, Conrad-Joachim
(86) Internationale Anmeldenummer: PCT/DE2019/100595
(87) Internationale Veröffentlichungsnummer: WO 2020/025080

(56) Entgegenhaltungen:
- EP-A1- 2 322 387
- DE-A1-102013 001 585
- FR-A- 643 811
- US-A- 1 954 776
- US-A- 3 850 466

## Beschreibung

Die Erfindung betrifft eine Stoßfängeranordnung für ein Kraftfahrzeug, wobei die Stoßfängeranordnung einen Stoßfängerquerträger aufweist und zwei voneinander beabstandete Stützprofile, deren erste Enden jeweils mittelbar oder unmittelbar an einem der beiden endnahen Bereichen des Stoßfängerquerträgers befestigt sind und die jeweils mit einem zweiten Ende an am Kraftfahrzeug ausgebildeten Chassisteilen oder Längsträgerteilen befestigt sind, wobei der Stoßfängerquerträger mit den Stützprofilen an der Fahrzeugstruktur gehalten ist und einen gebogenen Abschnitt in Form eines Rohrabschnitts oder Rinnenabschnitts oder Profilabschnitts aufweist, wobei der Abschnitt mit seinen Enden nahe der zweiten Enden der Stützprofile an den Chassisteilen oder Längsträgerteilen befestigt ist, wobei der gebogene Abschnitt mit einem mittleren Bereich zu dem Stoßfängerquerträger vorragend geformt ist und damit am Stoßfängerquerträger mindestens anliegt.

Stoßfängeranordnungen für die untere Lastebene sind im Stand der Technik bekannt. Sie dienen dazu, die durch einen Aufprall in das Fahrzeug eingebrachte kinetische Energie, durch plastische Verformung der Stoßfängeranordnung bzw. deren Bauteile über einen definierten Weg, zu absorbieren. Dadurch wird ein durch den Aufprall resultierender Schaden an Fahrzeuginsassen, an der Fahrzeugstruktur und an daran angrenzenden Bauteilen reduziert oder sogar verhindert.

Eine Stoßfängeranordnung gemäß dem Oberbegriff des Anspruches 1 ist aus der FR 643 811 A bekannt.

Die Aufgabe der Erfindung liegt darin eine kostengünstige Stoßfängeranordnung mit einem geringen Gewicht zu schaffen, die die bei einem Frontaufprall in das Fahrzeug eingebrachte Energie besser absorbiert und die Aufnahme größerer Energien ermöglicht. Gleichzeitig soll der Längsträger-Querverbund sichergestellt bzw. verbessert werden.

Zudem soll eine Bereicherung der Produktvielfalt erfolgen, also alternative konstruktive Lösungen zur Verfügung gestellt werden.

Zur Lösung der Aufgabe schlägt die Erfindung vor, der mittlere Bereich einen von dem Querschnitt des Abschnitts abweichenden, sich verjüngenden Querschnitt aufweist.

Der gebogene Abschnitt ist hinter dem Querträger angeordnet und liegt mit einem mittleren Bereich an dem Querträger an.

Durch den Abschnitt ist der Querträger im Falle eines frontalen Aufpralls rückseitig gestützt und verstärkt, wobei sowohl der Querträger als auch der gebogene Abschnitt bei dem Aufprall verformt wird, sodass eine höhere Aufprallenergie absorbiert werden kann.

Dadurch, dass der gebogene Abschnitt mit einem mittleren Bereich an dem Querträger anliegt, wird der Querträger bei und unmittelbar nach dem Aufprall rückseitig gestützt und verstärkt. Durch die in Richtung des Querträgers gebogene, vorzugsweise symmetrische Form des Abschnitts, weist dieser eine optimale Form auf, um die eingebrachte Energie gleichmäßig über einen definierten Weg abzubauen.

Bei einem mittig auf das Fahrzeug einwirkenden Aufprall, wie es beispielsweise bei einem Pfahltest der Fall ist, legt sich der Querträger und der dahinter liegende, gebogene Abschnitt bei der Verformung um das Hindernis (z.B. den Pfahl) herum und absorbiert die eingebrachte Energie, wobei gleichzeitig der Längsträger-Querverbund verbessert ist. Die Stützprofile dienen dazu, den Querträger an der Fahrzeugstruktur zu halten. Während des Aufpralls werden die Stützprofile teilweise verformt und nehmen einen Teil der Aufprallenergie auf, wobei die Stützprofile gleichzeitig die endnahen Bereiche des Querträgers abstützen und das Einknicken des Querträgers und des gebogenen Abschnitts an den gewünschten Stellen unterstützen. Durch diese Anordnung ist ein gleichmäßiger und erhöhter Energieabbau möglich, wobei gleichzeitig der Querverbund der Längsträger sichergestellt ist.

Bei einem Frontaufprall wird der Querträger etwa mittig und der an dem Querträger in diesem mittigen Bereich anliegende mittlere Bereich des Abschnitts zuerst verformt. Durch den sich verjüngenden Querschnitt des Abschnitts in diesem Bereich kann dieser leichter verformt werden, sodass über den Verformungsweg eine besonders gleichmäßige und dadurch vorteilhafte Energieabsorption erfolgen kann.

Der gebogene Abschnitt weist die Form eines Rohrabschnitts oder Rinnenabschnitts oder Profilabschnitts auf, sodass dieser nur ein geringes Gewicht aufweist.

Die Stützprofile dienen dazu, den Querträger an der Fahrzeugstruktur zu halten. Während eines Aufpralls werden die Stützprofile teilweise verformt und nehmen einen Teil der Aufprallenergie auf, wobei die Stützprofile gleichzeitig die endnahen Bereiche des Querträgers abstützen und ein Einknicken des Querträgers unterstützen, sodass dieser an den gewünschten Stellen einknickt und sich verformt.

Vorzugsweise ist vorgesehen, dass der gebogene Abschnitt und/oder die Stützprofile einen runden, eckigen, ovalen, u-förmigen oder halbschalenförmigen Querschnitt aufweisen.

Dadurch ist eine besonders kostengünstige Stoßfängeranordnung mit einem geringen Gewicht bereitgestellt.

Bevorzugt ist dabei vorgesehen, dass der Abschnitt halbkreisförmig gebogen ist.

Dadurch, dass der Abschnitt ein gleichmäßig zu einem Halbkreis gebogener Abschnitt ist, ist dieser besonders kostengünstig herstellbar.

Alternativ kann bevorzugt vorgesehen sein, dass der Abschnitt c-förmig gebogen ist.

Der c-förmige Abschnitt weist im Bereich der an den Chassisteilen oder Längsträgerteilen befestigten Enden gerade verlaufende Bereiche auf. Durch die gerade verlaufenden Bereiche an den Enden erfolgt eine vorteilhafte Verformung, sodass eine verbesserte Energieabsorption erreicht wird, wobei gleichzeitig der Querverbund der Längsträger verbessert ist.

Dabei kann vorzugsweise vorgesehen sein, dass der gebogene Abschnitt einen gerade geformten Bereich aufweist, mit dem der Abschnitt an dem Querträger mindestens anliegt.

Der mittlere Bereich liegt mit dem gerade verlaufenden Bereich an dem Querträger an, sodass der mittlere Bereich nicht nur punktuell sondern über eine größere Fläche an dem Querträger anliegt. Dadurch ergibt sich der Vorteil, dass der Querträger über einen größeren Bereich rückseitig gestützt ist und auch bei außermittig auf die Fahrzeugfront auftreffenden Hindernissen eine gleichmäßige Verformung des Querträgers und des Abschnittes erfolgt. Außerdem ist ein seitliches Abgleiten des Abschnitts durch die größere Anlagefläche auch bei außermittig auf die Fahrzeugfront aufprallenden Hindernissen verhindert.

Es ist vorzugsweise vorgesehen, dass der Abschnitt und/oder die Stützprofile Bereiche unterschiedlicher Querschnitte aufweist oder aufweisen.

Dadurch können die Stützprofile und/oder der Abschnitt so eingestellt werden, dass eine besonders vorteilhafte Umformung erfolgt und ein gleichmäßiger Energieabbau erfolgen kann.

Besonders vorteilhaft wirkt sich ein ovaler Querschnitt im an dem Querträger anliegenden Bereich aus. Durch den ovalen Querschnitt ist eine an dem Querträger anliegende Fläche vergrößert, sodass bei einem außermittig auf die Fahrzeugfront aufprallenden Hindernis ein seitliches Abgleiten des Abschnitts verhindert ist.

Es ist bevorzugt vorgesehen, dass der Abschnitt und/oder die Stützprofile aus Stahl, Aluminium oder Magnesium oder aus Faserverbundwerkstoffen bestehen.

Diese ermöglichen eine kostengünstige Herstellung.

Vorzugsweise ist auch vorgesehen, dass der Abschnitt und/oder die Stützprofile Bereiche geringerer Festigkeit aufweisen.

Dadurch können die Stützprofile und/oder der Abschnitt so eingestellt werden, dass eine gleichmäßige und besonders vorteilhafte Verformung der Teile erfolgt und ein gleichmäßiger Energieabbau erfolgen kann.

Besonders vorteilhafte Verformungseigenschaften weist ein Abschnitt auf, dessen mittlerer Bereich eine geringere Festigkeit aufweist.

Zudem kann bevorzugt vorgesehen sein, dass der mittlere Bereich am Stoßfängerquerträger anliegt und mit diesem kraftschlüssig, formschlüssig oder stoffschlüssig verbunden ist.

Dadurch kann beispielsweise bei einem außermittigen Aufprall ein Abgleiten des Abschnitts und eine damit ggf. verbundene Verschlechterung der Verformung und Energieaufnahme verhindert werden.

Vorzugsweise ist vorgesehen, dass die ersten Enden der Stützprofile mittelbar über einen hohlen Formkörper aus Blech an dem Stoßfängerquerträger befestigt sind, wobei der hohle Formkörper zueinander und zum Stoßfängerquerträger parallele erste und zweite Schenkelflächen und mindestens eine die Schenkelflächen verbindende Fläche aufweist, wobei der Formkörper an dem Querträger oder an Teilen des Querträgers fixiert ist und das erste Ende des Stützprofils an dem Formkörper fixiert ist.

Durch den hohlen Formkörper ist ein zusätzliches Deformationselement vorgesehen, welches zwischen den ersten Enden der Stützprofile und dem Querträger angeordnet ist. Der Formkörper ist an dem Querträger fixiert.

Der Querträger kann beispielsweise einen u-förmigen Querschnitt mit einer Basisfläche und zwei davon abragenden Schenkeln aufweisen. Die Basisfläche ist die einem Hindernis zugewandte Fläche, wobei die Schenkel in Richtung der Fahrzeugstruktur von der Basisfläche abragen.

Das Formteil weist zwei Schenkelflächen und mindestens eine die Schenkelflächen verbindende Fläche auf, sodass dieses beispielsweise einen u-förmigen oder quadratischen oder rechteckigen Querschnitt aufweist. Die Schenkelflächen des Formteils sind parallel zum Querträger, insbesondere zur Basisfläche des Querträgers angeordnet.

Das Formteil kann beispielsweise mit einer Schenkelfläche an der Basisfläche des Querträgers befestigt sein. Es kann aber auch z.B. mit der die Schenkelflächen verbindenden Fläche an Teilen des Querträgers, nämlich an einem der Schenkel des Querträgers, befestigt sein.

Dabei ist vorzugsweise vorgesehen, dass zwischen dem Querträger und der ersten Schenkelfläche ein Abstandsspalt angeordnet ist.

Die Größe des Abstandsspalts kann in gewünschter Weise gewählt werden, sodass ein größerer oder kleinerer Abstand zwischen der ersten Schenkelfläche und dem Querträger vorgesehen ist, wobei durch den Abstandsspalt bei einem leichten Aufprall lediglich eine Beschädigung des Querträgers, jedoch keine Beschädigung des hohlen Formteils erfolgt.

Bevorzugt ist vorgesehen, dass das erste Ende jedes Stützprofils mit seiner Stirnseite an der zweiten Schenkelfläche des Formteils fixiert ist.

Bei einem Aufprall wird dadurch zuerst das Formteil verformt, bevor eine Verformung der Stützprofile erfolgt. Handelt es sich um einen leichten Aufprall, so wird lediglich das Formteil verformt. Die Stützprofile bleiben unbeschädigt.

Die Stützprofile sind beispielsweise stirnseitig an das Formteil angeschweißt und halten den Querträger an dem Fahrzeug.

Alternativ kann vorzugsweise vorgesehen sein, dass das erste Ende jedes Stützprofils mindestens die zweite Schenkelfläche des Formteils durchstößt und zumindest ein Teil des Endes in dem Hohlraum des Formkörpers angeordnet ist, wobei das erste Ende mindestens im Durchstoßbereich vorzugsweise stoffschlüssig an der zweiten Schenkelfläche fixiert ist.

In der zweiten Schenkelfläche ist eine Durchgangslochung vorgesehen, durch die das Stützprofil durchgesteckt ist und in den Hohlraum zwischen den Schenkelflächen ragt. In der Durchgangslochung ist das Stützprofil fixiert, beispielsweise ist es im Bereich der Durchgangslochung an die zweite Schenkelfläche des Formkörpers angeschweißt. Das Stützprofil kann beliebig weit durch die Durchgangslochung in den Hohlraum eingeschoben werden und anschließend an dem zweiten Schenkel fixiert werden. Durch die Einschubtiefe kann der Kraft-Weg-Verlauf beim Aufprall eingestellt werden.

Je weiter das Stützprofil in die Lochung eingesteckt ist, desto geringer ist der Abstand der Stirnseite des Stützprofils zu der ersten Schenkelfläche und damit zum Querträger und desto eher wird bei einem Aufprall die auf das Fahrzeug wirkende Energie in die Stützprofile eingeleitet.

Das Stützprofil kann so weit durch die Durchgangslochung geschoben werden, dass es stirnseitig an der ersten Schenkelfläche anliegt und vorzugsweise zusätzlich an dieser fixiert ist.

Auch kann das Stützprofil so weit durch die Durchgangslochung geschoben werden, dass es auch die erste Schenkelfläche durchstößt und ein Teil des ersten Endes des Stützprofils in einem Abstandsspalt zwischen dem Querträger und der ersten Schenkelfläche angeordnet ist oder unmittelbar an dem Querträger anliegt.

Vorzugsweise ist dabei vorgesehen, dass das erste Ende des Stützprofils mit seiner Stirnseite an der ersten Schenkelfläche anliegt und an dieser vorzugsweise stoffschlüssig fixiert ist.

Dabei ergibt sich bei einem Frontalaufprall ein besonders vorteilhafter Kraft-Weg-Verlauf.

Ausführungsbeispiele der erfindungsgemäßen Stoßfängeranordnung sind in den Figuren dargestellt und im Folgenden näher erläutert.

Es zeigt:
- Fig. 1: eine Stoßfängeranordnung mit einem halbkreisförmig gebogenen Abschnitt;
- Fig. 2: eine Stoßfängeranordnung mit einem c-förmig gebogenen Abschnitt;
- Fig. 3: eine Stoßfängeranordnung mit einem ovalen Querschnitt im mittleren Bereich des Abschnitts;
- Fig. 4: verschiedene Querschnitte einer Stoßfängeranordnung;
- Fig. 5: Ausschnitte einer Stoßfängeranordnung, für verschiedene Verbindungsvarianten zwischen einem Stützprofil und dem Querträger.

Die Figuren zeigen eine Stoßfängeranordnung 1 für ein Kraftfahrzeug, für eine untere Lastebene.

Die Stoßfängeranordnung 1 weist einen Stoßfängerquerträger 2 und zwei voneinander beabstandete Stützprofile 3,3' auf, deren erste Enden 4,4' jeweils mittelbar über einen hohlen Formkörper 11,11' an einem der beiden endnahen Bereichen des Stoßfängerquerträgers 2 befestigt sind. Mit einem zweiten Ende 5,5' sind die Stützprofile 3,3' jeweils über einer Anschraubplatte an am Kraftfahrzeug ausgebildeten Chassisteilen oder Längsträgerteilen 6 befestigt. Die Stützprofile 3,3' halten den Stoßfängerquerträger 2 an der Fahrzeugstruktur. Des Weiteren weist die Stoßfängeranordnung 1 einen hinter dem Querträger 2 angeordneten, vorzugsweise symmetrisch gebogenen Abschnitt 7 auf. Dieser ist in den Ausführungsbeispielen als Rohrprofil ausgebildet. Der gebogene Abschnitt 7 ist zwischen der Fahrzeugstruktur und dem Querträger 2 angeordnet, wobei der Abschnitt 7 mit seinen Enden 8,8' nahe den zweiten Enden 5,5' der Stützprofile 3,3' an den Chassisteilen oder Längsträgerteilen 6 befestigt ist und einen mittleren Bereich 9 aufweist, der in Richtung des Stoßfängerquerträger 2 vorragend geformt ist. Mit dem mittleren Bereich 9 liegt der Abschnitt 7 zumindest teilweise am Stoßfängerquerträger 2 an. Es ist auch möglich den an dem Querträger 2 anliegenden Bereich 9 an dem Querträger 2 zu fixieren und dadurch ein seitliche Abgleiten des Abschnitts 7 bei einem außermittigen Aufprall auf die Fahrzeugfront zu vermeiden.

Durch den anliegenden Bereich 9 ist der Querträger 2 im Falle eines frontalen Aufpralls gestützt und verstärkt. Bei dem Aufprall wird sowohl der Querträger 2 als auch der gebogene Abschnitt 7 verformt, sodass eine noch höhere Aufprallenergie absorbiert werden kann, als bei Stoßfängeranordnungen, die ausschließlich einen mit der Fahrzeugstruktur gekoppelten Querträger 2 aufweisen. Dadurch, dass der gebogene Abschnitt 7 mit einem mittleren Bereich 9 an dem Querträger 2 anliegt, wird der Querträger 2 bei und unmittelbar nach dem Aufprall rückseitig gestützt und verstärkt. Durch die in Richtung des Querträgers 2 gebogene, vorzugsweise symmetrische Form des Abschnitts 7, weist dieser eine optimale Form auf, um die eingebrachte Energie gleichmäßig über einen definierten Weg abzubauen.

Bei einem mittig auf das Fahrzeug einwirkenden Aufprall, wie es beispielsweise bei einem Pfahltest der Fall ist, legt sich der Querträger 2 und der dahinter liegende gebogene Abschnitt 7 bei der Verformung um das Hindernis (z.B. den Pfahl) herum und absorbiert die eingebrachte Energie, wobei gleichzeitig der Längsträger-Querverbund verbessert ist.

Die Stützprofile 3,3' dienen dazu, den Querträger 2 an der Fahrzeugstruktur zu halten und die endnahen Bereiche des Querträgers 2 zu stützen. Während des Aufpralls werden die Stützprofile 3,3' teilweise verformt und nehmen einen Teil der Aufprallenergie auf, wobei die Stützprofile 3,3' gleichzeitig die endnahen Bereiche des Querträgers 2 abstützen und ein Einknicken des Querträgers 2 und des gebogenen Abschnitts 7 an den dafür bevorzugten Stellen unterstützen.

Durch diese Anordnung ist ein gleichmäßiger und erhöhter Energieabbau möglich, wobei gleichzeitig der Querverbund der Längsträger sichergestellt ist. Die Stoßfängeranordnung 1 ist besonders kostengünstig herstellbar und weist nur ein geringes Gewicht auf.

Der gebogene Abschnitt 7 und die Stützprofile 3,3' sind Rohrprofile. Durch die Ausführung als Hohlprofile, weist die Stoßfängeranordnung 1 nur ein geringes Gewicht auf. Ein Rohrprofil kann zudem auf kostengünstige Weise zu einem gebogenen Abschnitt 7 verarbeitet werden.

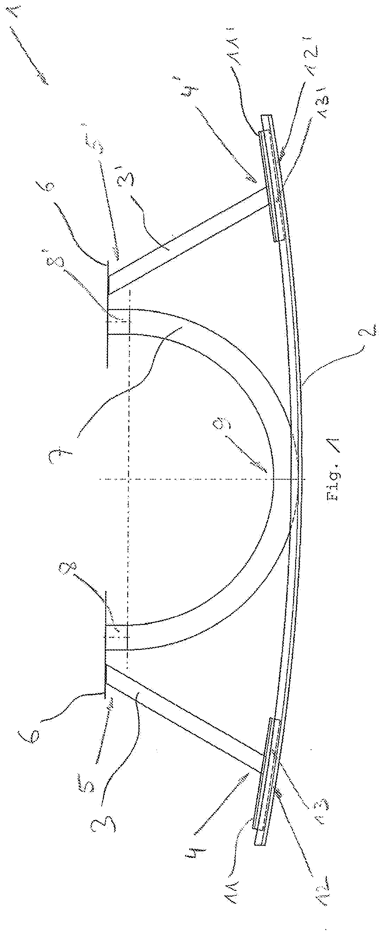

Fig. 1 zeigt eine Stoßfängeranordnung 1, bei der der Abschnitt 7 halbkreisförmig gebogen ist. Ein solcher Abschnitt 7 ist besonders kostengünstig herstellbar, da beim umformen des Rohrprofils beispielsweise keine unterschiedlichen Querschnitte oder Abschnitte erstellt werden müssen.

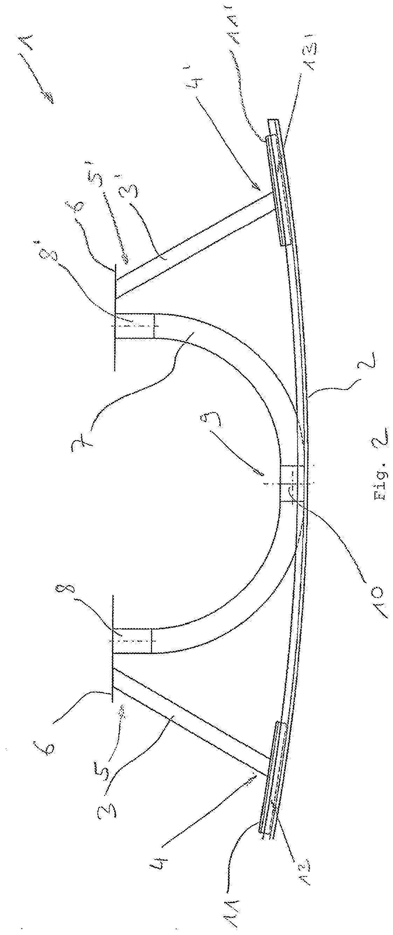

Fig. 2 zeigt eine alternative Ausführungsform, bei der der gebogene Abschnitt 7 c-förmig gebogen ist und der gebogene Abschnitt 7 einen gerade geformten Bereich 10 aufweist, mit dem der Abschnitt 7 an dem Querträger 2 mindestens anliegt.

Der c-förmige Abschnitt 7 weist im Bereich der an den Chassisteilen oder Längsträgerteilen 6 befestigten Enden 8,8' gerade verlaufende Bereiche auf. Im mittleren Bereich 9 weist der Abschnitt 7 den gerade geformten Bereich 10 auf. Durch die geraden Bereiche erfolgt eine besonders vorteilhafte Verformung des Abschnitts 7, sodass eine verbesserte Energieabsorption erreicht wird, wobei gleichzeitig der Querverbund der Längsträger verbessert ist. Der mittlere Bereich 9 liegt mit dem gerade verlaufenden Bereich 10 an dem Querträger 2 an, sodass der mittlere Bereich 9 nicht nur punktuell sondern über eine größere Fläche an dem Querträger 2 anliegt, wobei der Begriff anliegen auch so zu verstehen ist, dass ein geringer Abstandsspalt zwischen dem Querträger 2 und dem mittleren Bereich 9 vorgesehen ist, um ggf. während der Fahrt entstehende Klappergeräusche zu verhindern. Dadurch ergibt sich der Vorteil, dass der Querträger 2 über einen größeren Bereich rückseitig gestützt ist und der Abschnitt 7 auch bei außermittig auf die Fahrzeugfront auftreffenden Hindernissen nicht seitlich abgleitet, sondern eine gleichmäßige Verformung des Querträgers 2 und des Abschnittes 7 erfolgen kann.

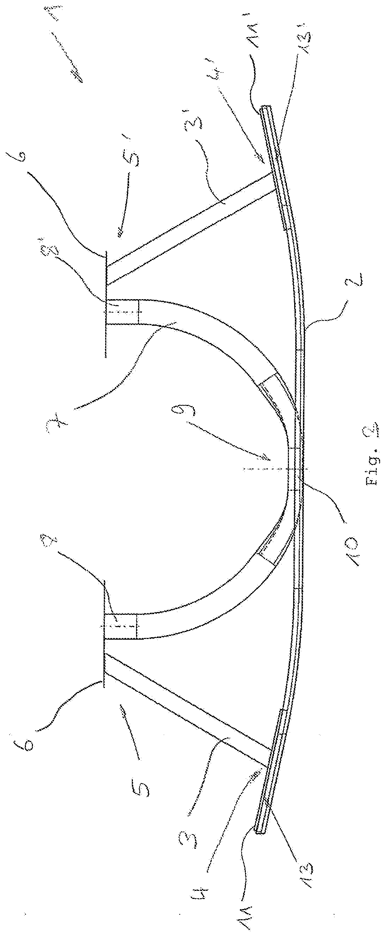

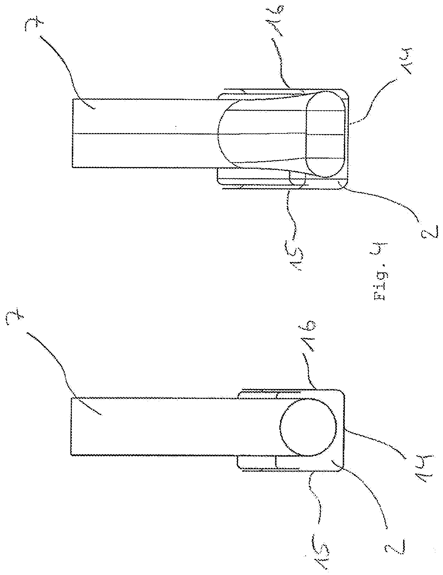

Der Abschnitt 7 kann zudem Bereiche mit unterschiedlichen Querschnitten aufweisen, wie es z.B. in Fig. 3 und Fig. 4 (rechte Abbildung) gezeigt ist. Der Abschnitt 7 weist einen runden Querschnitt auf, wobei der mittlere Bereich 9 einen etwa ovalen Querschnitt aufweist. Die länglichen Flächen des ovalen Abschnitts weisen eine größere Kontaktfläche zum Querträger 2 auf, als es beispielsweise bei einem runden Querschnitt der Fall ist. Dadurch ist ein seitliches Abgleiten des Abschnitts 7 bei einem außermittig auf die Fahrzeugfront aufprallenden Hindernis vermieden.

Bei einem Frontaufprall wird der Querträger 2 etwa mittig und der an dem Querträger 2 in diesem mittigen Bereich anliegende mittlere Bereich 9 des Abschnitts 7 zuerst verformt. Durch den sich verjüngenden Querschnitt des Abschnitts 7 in diesem Bereich kann dieser leichter verformt werden, sodass über den Verformungsweg eine besonders gleichmäßige und dadurch vorteilhafte Energieabsorption erfolgen kann.

Der Abschnitt 7 und/oder die Stützprofile 3,3' können vorzugsweise aus Stahl, Aluminium oder Magnesium oder aus Faserverbundwerkstoffen bestehen. Diese Werkstoffe ermöglichen eine kostengünstige Herstellung entsprechender Teile.

Der Abschnitt 7 und/oder die Stützprofile 3,3' können Bereiche geringerer Festigkeit aufweisen, sodass diese gleichmäßig und besonders vorteilhaft verformt werden und ein gleichmäßiger Energieabbau erfolgen kann. Das Bauteil 7 kann z.B. aus hochfesten Mangan-Borstählen bestehen, wobei im mittleren Bereich 9 mittels eines zusätzlichen Temperierungsprozess das Bauteil 7 eine geringere Festigkeit in Verbindung mit höheren Dehnungswerten aufweisen kann.

Zudem kann der mittlere Bereich 9, der am Stoßfängerquerträger 2 anliegt, kraftschlüssig, formschlüssig oder stoffschlüssig mit dem Querträger 2 verbunden sein, wobei beispielsweise bei einem außermittigen Aufprall ein Abgleiten des Abschnitts 7 und eine damit ggf. verbundene Verschlechterung der Verformung und Energieaufnahme verhindert werden. In diesem Fall liegt der mittlere Bereich 9 unmittelbar und plan an dem Querträger 2 an.

Die ersten Enden 4,4' der Stützprofile 3,3' sind mit einem hohlen Formkörper 11,11' aus Blech verbunden, der an dem Stoßfängerquerträger 2 befestigt ist. Der hohle Formkörper 11,11' weist einen rechteckigen Querschnitt mit zueinander und zum Stoßfängerquerträger 2 parallelen ersten und zweiten Schenkelflächen und zwei die Schenkelflächen verbindende Flächen auf, wobei der Formkörper 11,11' an Teilen des Querträgers 2 fixiert ist und das erste Ende 4,4' des Stützprofils 3,3' an dem Formkörper 11,11' fixiert ist. Der hohle Formkörper 11,11' ist als ein zusätzliches Deformationselement vorgesehen, welches zwischen den ersten Enden 4,4' der Stützprofile 3,3' und dem Querträger 2 angeordnet ist. Der Formkörper 11,11' ist an Teilen des Querträgers 2 fixiert, wobei der Querträger 2 einen u-förmigen Querschnitt mit einer Basisfläche 14 und zwei davon abragenden Schenkeln 15,16 aufweist und eine Fläche des Formteils 11,11' an einem Schenkel 15 oder 16 des Querträgers 2 fixiert, z.B. angeschraubt oder angeschweißt ist. Die Schenkelflächen des Formteils 11,11' sind parallel zum Querträger 2, insbesondere zur Basisfläche 14 des Querträgers 2 angeordnet, wobei die Basisfläche 14 die einem Hindernis zugewandte Fläche ist und die Schenkel 15,16 in Richtung der Fahrzeugstruktur von der Basisfläche 14 abragen.

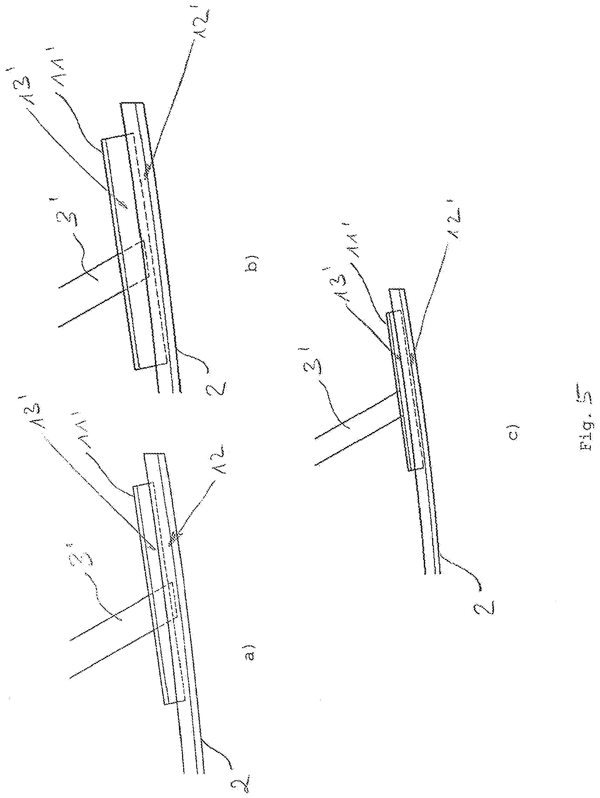

Zwischen dem Querträger 2 und der ersten Schenkelfläche des Formkörpers 11,11' ist ein Abstandsspalt 12,12' angeordnet, wie die Figuren 1,2,3 und 5 zeigen. Die Größe des Abstandsspalts 12,12' kann in gewünschter Weise gewählt werden, sodass ein größerer oder kleinerer Abstand zwischen der ersten Schenkelfläche und dem Querträger 2 vorgesehen ist, wobei durch den Abstandsspalt 12,12' bei einem leichten Aufprall keine Beschädigung des hohlen Formkörpers 11,11' erfolgt, sondern nur eine Verformung des Querträgers 2 erfolgt. In Fig. 5 sind Beispiele für verschieden große Abstandsspalte 12,12' gezeigt, wobei der Abstandsspalt 12,12' in Beispiel a) am größten und in Beispiel c) am geringsten ist.

Fig. 5 zeigt darüber hinaus Möglichkeiten, ein Stützprofil 3,3' mit einem hohlen Formkörper 11,11' zu verbinden.

Das erste Ende 4,4' des Stützprofils 3,3' kann mit seiner Stirnseite an der zweiten Schenkelfläche des Formteils 11,11' fixiert sein, wie es in Variante c) gezeigt ist. Bei einem Aufprall wird dadurch zuerst der Formkörper 11,11' verformt, bevor eine Verformung des Stützprofils 3,3' erfolgt. Handelt es sich um einen leichten Aufprall, so wird lediglich das Formteil 11,11' verformt. Die Stützprofile 3,3' bleiben jedoch unbeschädigt. Das Stützprofil 3,3' ist stirnseitig an den Formkörper 11,11' angeschweißt.

Alternativ kann das erste Ende 4,4' des Stützprofils 3,3' die zweite Schenkelfläche des Formteils 11,11' durchstoßen und ein Teil des Endes 4,4' ist in dem Hohlraum 13,13' des Formkörpers 11,11' angeordnet. Im Durchstoßbereich ist das Stützprofil 3,3' stoffschlüssig an der zweiten Schenkelfläche fixiert. Diese Variante zeigt Fig. 5 b). In der zweiten Schenkelfläche ist eine Durchgangslochung vorgesehen, durch die das Stützprofil 3,3' durchgesteckt ist und in den Hohlraum 13,13' zwischen den Schenkelflächen ragt. In der Durchgangslochung ist das Stützprofil 3,3' angeschweißt, wobei das Stützprofil 3,3' beliebig weit durch die Durchgangslochung in den Hohlraum 13,13' eingeschoben werden kann und anschließend an dem zweiten Schenkel fixiert werden kann. Durch die Einschubtiefe kann der Kraft-Weg-Verlauf beim Aufprall optimal eingestellt werden.

Je weiter das Stützprofil 3,3' in die Lochung eingesteckt ist, desto geringer ist der Abstand der Stirnseite des Stützprofils 3,3' zu der ersten Schenkelfläche und damit zum Querträger 2 und desto eher wird bei einem Aufprall die auf das Fahrzeug wirkende Energie in die Stützprofile 3,3' eingeleitet.

Eine dritte Variante zeigt Fig. 5 a), bei der das Stützprofil 3,3' so weit durch die Durchgangslochung geschoben ist, dass es auch die erste Schenkelfläche durchstößt und ein Teil des ersten Endes 4,4' des Stützprofils 3,3' in dem Abstandsspalt 12,12' zwischen dem Querträger 2 und der ersten Schenkelfläche angeordnet ist. Dazu weist auch die erste Schenkelfläche eine Durchgangslochung auf, durch die das Ende 4,4' des Stützprofils 3,3' gesteckt ist und in der das Stützprofil 3,3' zusätzlich fixiert ist.

Die Verschiedenen Varianten ermöglichen eine besonders vorteilhafte Einstellung des Kraft-Weg-Verlaufes, sodass eine optimale Energieaufnahme der Stoßfängeranordnung 1 einstellbar ist.

## Patentansprüche

1. Stoßfängeranordnung (1) für ein Kraftfahrzeug, wobei die Stoßfängeranordnung (1) einen Stoßfängerquerträger (2) aufweist und zwei voneinander beabstandete Stützprofile (3,3'), deren erste Enden (4,4') jeweils mittelbar oder unmittelbar an einem der beiden endnahen Bereichen des Stoßfängerquerträgers (2) befestigt sind und die jeweils mit einem zweiten Ende (5,5') an am Kraftfahrzeug ausgebildeten Chassisteilen oder Längsträgerteilen (6) befestigt sind, wobei der Stoßfängerquerträger (2) mit den Stützprofilen (3,3') an der Fahrzeugstruktur gehalten ist und einen gebogenen Abschnitt (7) in Form eines Rohrabschnitts oder Rinnenabschnitts oder Profilabschnitts aufweist, wobei der Abschnitt (7) mit seinen Enden (8,8') nahe der zweiten Enden (5,5') der Stützprofile (3,3') an den Chassisteilen oder Längsträgerteilen (6) befestigt ist, wobei der gebogene Abschnitt (7) mit einem mittleren Bereich (9) zu dem Stoßfängerquerträger (2) vorragend geformt ist und damit am Stoßfängerquerträger (2) mindestens anliegt, **dadurch gekennzeichnet, dass** der mittlere Bereich (9) einen von dem Querschnitt des Abschnitts (7) abweichenden, sich verjüngenden Querschnitt aufweist.

2. Stoßfängeranordnung (1) nach Anspruch 1, **dadurch gekennzeichnet, dass** der Abschnitt (7) symmetrisch gebogen ist.

3. Stoßfängeranordnung (1) nach Anspruch 1 oder 2, **dadurch gekennzeichnet, dass** der gebogene Abschnitt (7) einen runden, eckigen, ovalen, u-förmigen oder halbschalenförmigen Querschnitt aufweisen.

4. Stoßfängeranordnung (1) nach Anspruch 1 bis 3, **dadurch gekennzeichnet, dass** die Stützprofile (3, 3') einen runden, eckigen, ovalen, u-förmigen oder halbschalenförmigen Querschnitt aufweisen.

5. Stoßfängeranordnung (1) nach einem der Ansprüche 1 bis 4, **dadurch gekennzeichnet, dass** der Abschnitt (7) halbkreisförmig gebogen ist.

6. Stoßfängeranordnung (1) nach einem der Ansprüche 1 bis 4, **dadurch gekennzeichnet, dass** der Abschnitt (7) c-förmig gebogen ist.

7. Stoßfängeranordnung (1) nach einem der Ansprüche 1 bis 5, **dadurch gekennzeichnet, dass** der gebogene Abschnitt (7) einen gerade geformten Bereich (10) aufweist, mit dem der Abschnitt (7) an dem Stoßfängerquerträger (2) mindestens anliegt.

8. Stoßfängeranordnung (1) nach einem der Ansprüche 1 bis 7, **dadurch gekennzeichnet, dass** der Abschnitt (7) Bereiche unterschiedlicher Querschnitte aufweist oder aufweisen.

9. Stoßfängeranordnung (1) nach einem der Ansprüche 1 bis 8, **dadurch gekennzeichnet, dass** die Stützprofile (3, 3') Bereiche unterschiedlicher Querschnitte aufweisen.

10. Stoßfängeranordnung (1) nach einem der Ansprüche 1 bis 9, **dadurch gekennzeichnet, dass** der Abschnitt (7) aus Stahl, Aluminium oder Magnesium oder aus Faserverbundwerkstoffen bestehen.

11. Stoßfängeranordnung (1) nach einem der Ansprüche 1 bis 10, **dadurch gekennzeichnet, dass** die Stützprofile (3, 3') aus Stahl, Aluminium oder Magnesium oder aus Faserverbundwerksoffen bestehen.

12. Stoßfängeranordnung (1) nach einem der Ansprüche 1 bis 11, **dadurch gekennzeichnet, dass** der Abschnitt (7) Bereiche geringerer Festigkeit aufweisen.

13. Stoßfängeranordnung (1) nach einem der Ansprüche 1 bis 12, **dadurch gekennzeichnet, dass** die Stützprofile (3, 3') Bereiche geringerer Festigkeit aufweisen.

14. Stoßfängeranordnung (1) nach einem der Ansprüche 1 bis 13, **dadurch gekennzeichnet, dass** der mittlere Bereich (9) am Stoßfängerquerträger (2) anliegt und mit diesem kraftschlüssig, formschlüssig oder stoffschlüssig verbunden ist.

15. Stoßfängeranordnung (1) nach einem der Ansprüche 1 bis 14, **dadurch gekennzeichnet, dass** die ersten Enden (4,4') der Stützprofile (3,3') mittelbar über einen hohlen Formkörper (11,11') aus Blech an dem Stoßfängerquerträger (2) befestigt sind, wobei der hohle Formkörper (11,11') zueinander und zum Stoßfängerquerträger parallele erste und zweite Schenkelflächen und mindestens eine die Schenkelflächen verbindende Fläche aufweist, wobei der Formkörper (11,11') an dem Stoßfängerquerträger (2) oder an Teilen des Stoßfängerquerträgers (2) fixiert ist und das erste Ende des Stützprofils (4,4') an dem Formkörper (11,11') fixiert ist.

16. Stoßfängeranordnung (1) nach Anspruch 15, **dadurch gekennzeichnet, dass** zwischen dem Stoßfängerquerträger (2) und der ersten Schenkelfläche ein Abstandsspalt (12,12') angeordnet ist.

17. Stoßfängeranordnung (1) nach Anspruch 15 oder 16, **dadurch gekennzeichnet, dass** das erste Ende (4,4') jedes Stützprofils (3,3') mit seiner Stirnseite an der zweiten Schenkelfläche des Formteils (11,11') fixiert ist.

18. Stoßfängeranordnung (1) nach Anspruch 15 oder 16, **dadurch gekennzeichnet, dass** das erste Ende (4,4') jedes Stützprofils (3,3') mindestens die zweite Schenkelfläche des Formteils (11,11') durchstößt und zumindest ein Teil des Endes (4,4') in dem Hohlraum (13,13') des Formkörpers (11,11') angeordnet ist, wobei das erste Ende (4,4') mindestens im Durchstoßbereich an der zweiten Schenkelfläche fixiert ist.

19. Stoßfängeranordnung (1) nach Anspruch 18, **dadurch gekennzeichnet, dass** das erste Ende (4,4') mindestens im Durchstoßbereich stoffschlüssig an der zweiten Schenkelfläche fixiert ist.

20. Stoßfängeranordnung (1) nach Anspruch 18 oder 19, **dadurch gekennzeichnet, dass** das erste Ende (4,4') des Stützprofils (3,3') mit seiner Stirnseite an der ersten Schenkelfläche anliegt und an dieser fixiert ist.

21. Stoßfängeranordnung (1) nach Anspruch 20, **dadurch gekennzeichnet, dass** das erste Ende (4,4') des Stützprofils (3,3') mit seiner Stirnseite an der ersten Schenkelfläche anliegt und an dieses stoffschlüssig fixiert ist.

## Claims

1. A bumper assembly (1) for a motor vehicle, the bumper assembly (1) comprising a bumper crossbeam (2) and two spaced-apart support profiles (3, 3'), the first ends (4, 4') of which are respectively attached directly or indirectly at one of the two regions of the bumper crossbeam (2) adjacent the ends and which are respectively attached with a second end (5, 5') at chassis parts or longitudinal beam parts (6) formed at the motor vehicle, the bumper crossbeam (2) being held with the support profiles (3, 3') at the vehicle structure and comprising a bent section (7) in the form of a pipe section or a channel section or a profile section, the section (7) being attached with its ends (8, 8') adjacent the second ends (5, 5') of the support profiles (3, 3') at the chassis parts or longitudinal beam parts (6), the bent section (7) being shaped, with a middle region (9), protruding to the bumper crossbeam (2) and thus at least bearing against the bumper crossbeam (2), **characterized by that** the middle region (9) has a tapered cross-section differing from the cross-section of the section (7).

2. The bumper assembly (1) of claim 1, **characterized by that** the section (7) is symmetrically bent.

3. The bumper assembly (1) of claim 1 or 2, **characterized by that** the bent section (7) has a round, cornered, oval, u-shaped, or half-shell-shaped cross-section.

4. The bumper assembly (1) of claim 1 to 3, **characterized by that** the support profiles (3, 3') have a round, cornered, oval, u-shaped, or half-shell-shaped cross-section.

5. The bumper assembly (1) of one of claims 1 to 4, **characterized by that** the section (7) is bent as a semi-circle.

6. The bumper assembly (1) of one of claims 1 to 4, **characterized by that** the section (7) is bent in a c-shape.

7. The bumper assembly (1) of one of claims 1 to 5, **characterized by that** the bent section (7) comprises a straight-shaped region (10), with which the section (7) at least bears against the bumper crossbeam (2).

8. The bumper assembly (1) of one of claims 1 to 7, **characterized by that** the section (7) comprises regions of different cross-sections.

9. The bumper assembly (1) of one of claims 1 to 8, **characterized by that** the support profiles (3, 3') comprise regions of different cross-sections.

10. The bumper assembly (1) of one of claims 1 to 9, **characterized by that** the section (7) consists of steel, aluminum, or magnesium, or matrix composites.

11. The bumper assembly (1) of one of claims 1 to 10, **characterized by that** the support profiles (3, 3') consist of steel, aluminum, or magnesium, or of matrix composites.

12. The bumper assembly (1) of one of claims 1 to 11, **characterized by that** the section (7) comprises regions of lower strength.

13. The bumper assembly (1) of one of claims 1 to 12, **characterized by that** the support profiles (3, 3') comprise regions of lower strength.

14. The bumper assembly (1) of one of claims 1 to 13, **characterized by that** the middle region (9) bears against the bumper crossbeam (2) and is connected therewith by positive action, by fore action, or by bond action.

15. The bumper assembly (1) of one of claims 1 to 14, **characterized by that** the first ends (4, 4') of the support profiles (3, 3') are directly attached by a hollow shaped body (11, 11') made of sheetsteel at the bumper crossbeam (2), the hollow shaped body (11, 11') comprising first and second leg surfaces in parallel to each other and to the bumper crossbeam and at least one surface connecting the leg surfaces, the shaped body (11, 11') being fixed at the bumper crossbeam (2) or at parts of the bumper crossbeam (2), and the first end of the support profile (4, 4') being fixed at the shaped body (11, 11').

16. The bumper assembly (1) of claim 15, **characterized by that** between the bumper crossbeam (2) and the first leg surface, a clearance gap (12, 12') is disposed.

17. The bumper assembly (1) of claim 15 or 16, **characterized by that** the first end (4, 4') of each support profile (3, 3') is fixed with its front side at the second leg surface of the shaped part (11, 11').

18. The bumper assembly (1) of claim 15 or 16, **characterized by that** the first end (4, 4') of each support profile (3, 3') penetrates at least the second leg surface of the shaped part (11, 11'), and at least part of the end (4, 4') is disposed in the hollow space (13, 13') of the shaped body (11, 11'), the first end (4, 4') being fixed at least in the penetration region at the second leg surface.

19. The bumper assembly (1) of claim 18, **characterized by** that the first end (4, 4') is fixed at least in the penetration region, by bond action, at the second leg surface.

20. The bumper assembly (1) of claim 18 or 19, **characterized by that** the first end (4, 4') of the support profile (3, 3') bears, with its front side, against the first leg surface and is fixed thereat.

21. The bumper assembly (1) of claim 20, **characterized by that** the first end (4, 4') of the support profile (3, 3') bears, with its front side, against the first leg surface and is fixed thereat by bond action.

## Revendications

1. Ensemble pare-chocs (1) pour un véhicule, l'ensemble pare-chocs (1) comprenant une poutre pare-chocs (2) et deux profilés d'appui (3, 3') espacés, les premières extrémités (4, 4') desquels sont respectivement attachées directement ou indirectement à une des deux régions d'extrémité de la poutre pare-chocs (2) et qui sont respectivement attachées avec une deuxième extrémité (5, 5') à des parties de châssis ou parties de longeron (6) réalisées au véhicule, la poutre pare-chocs (2) avec les profilés d'appui (3, 3') étant retenue à la structure du véhicule et comprenant une partie (7) incurvée en forme de portion de tube ou de portion de canal ou de portion de profilé, la partie (7) avec ses extrémités (8, 8') étant attachée près des deuxièmes extrémités (5, 5') des profilés d'appui (3, 3') aux parties de châssis ou parties de longeron (6), la partie (7) incurvée étant formée, avec une région médiane (9), faisant saillie de la poutre pare-chocs (2) et donc au moins venant en appui sur la poutre pare-chocs (2), **caractérisé en ce que** la région médiane (9) a une section en coupe amincie déviant de la section en coupe de la partie (7).

2. Ensemble pare-chocs (1) selon la revendication 1, **caractérisé en ce que** la partie (7) est incurvée symétriquement.

3. Ensemble pare-chocs (1) selon la revendication 1 ou 2, **caractérisé en ce que** la partie incurvée (7) a une section en coupe ronde, anguleuse, ovale, en forme d'u ou de demi-coque.

4. Ensemble pare-chocs (1) selon la revendication 1 à 3, **caractérisé en ce que** les profilés d'appui (3, 3') ont une section en coupe ronde, anguleuse, ovale, en forme d'u ou de demi-coque.

5. Ensemble pare-chocs (1) selon une des revendications 1 à 4, **caractérisé en ce que** la partie (7) est incurvée en forme semi-circulaire.

6. Ensemble pare-chocs (1) selon une des revendications 1 à 4, **caractérisé en ce que** la partie (7) est incurvée en forme de c.

7. Ensemble pare-chocs (1) selon une des revendications 1 à 5, **caractérisé en ce que** la partie incurvée (7) comprend une région (10) rectiligne, avec laquelle la partie (7) au moins vient en appui sur la poutre pare-chocs (2).

8. Ensemble pare-chocs (1) selon une des revendications 1 à 7, **caractérisé en ce que** la partie (7) comprend des régions de sections en coupe différentes.

9. Ensemble pare-chocs (1) selon une des revendications 1 à 8, **caractérisé en ce que** les profilés d'appui (3, 3') comprennent des régions de sections en coupe différentes.

10. Ensemble pare-chocs (1) selon une des revendications 1 à 9, **caractérisé en ce que** la partie (7) consiste en acier, aluminium ou magnésium ou des matériaux composites.

11. Ensemble pare-chocs (1) selon une des revendications 1 à 10, **caractérisé en ce que** les profilés d'appui (3, 3') consistent en acier, aluminium ou magnésium ou des matériaux composites.

12. Ensemble pare-chocs (1) selon une des revendications 1 à 11, **caractérisé en ce que** la partie (7) comprend des régions de moindre résistance.

13. Ensemble pare-chocs (1) selon une des revendications 1 à 12, **caractérisé en ce que** les profilés d'appui (3, 3') comprennent des régions de moindre résistance.

14. Ensemble pare-chocs (1) selon une des revendications 1 à 13, **caractérisé en ce que** la région médiane (9) vient en appui sur la poutre pare-chocs (2) et est liée à celle-ci par adhérence ou par emboîtement ou par matière.

15. Ensemble pare-chocs (1) selon une des revendications 1 à 14, **caractérisé en ce que** les premières extrémités (4, 4') des profilés d'appui (3, 3') sont attachées directement par une pièce creuse (11, 11') en tôle à la poutre pare-chocs (2), la pièce creuse (11, 11') comprenant des premières et deuxièmes surfaces de patte en parallèle l'une à l'autre et à la poutre pare-chocs, et au moins une surface liant les surfaces de patte, la pièce (11, 11') étant fixée à la poutre pare-chocs (2) ou à des parties de la poutre pare-chocs (2), et la première extrémité du profilé d'appui (4, 4') étant fixée à la pièce (11, 11').

16. Ensemble pare-chocs (1) selon la revendication 15, **caractérisé en ce qu'entre** la poutre pare-chocs (2) et la première surface de patte, une fente de distance (12, 12') est disposée.

17. Ensemble pare-chocs (1) selon la revendication 15 ou 16, **caractérisé en ce que** la première extrémité (4, 4') de chaque profilé d'appui (3, 3') est fixée avec sa face avant à la deuxième surface de patte de la pièce (11, 11').

18. Ensemble pare-chocs (1) selon la revendication 15 ou 16, **caractérisé en ce que** la première extrémité (4, 4') de chaque profilé d'appui (3, 3') pénètre au moins la deuxième surface de patte de la pièce (11, 11'), et au moins une partie de l'extrémité (4, 4') est disposée dans la cavité (13, 13') de la pièce (11, 11'), la première extrémité (4, 4') étant fixée au moins dans la région de pénétration à la deuxième surface de patte.

19. Ensemble pare-chocs (1) selon la revendication 18, **caractérisé en ce que** la première extrémité (4, 4') est fixée au moins dans la région de pénétration, par matière, à la deuxième surface de patte.

20. Ensemble pare-chocs (1) selon la revendication 18 ou 19, **caractérisé en ce que** la première extrémité (4, 4') du profilé d'appui (3, 3') vient en appui, avec sa face avant, sur la première surface de patte et est fixée à celle-ci.

21. Ensemble pare-chocs (1) selon la revendication 20, **caractérisé en ce que** la première extrémité (4, 4') du profilé d'appui (3, 3') vient en appui, avec sa face avant, sur la première surface de patte et est fixée à celle-ci par matière.
